# EUROPEAN PATENT SPECIFICATION

(11) **EP 1 050 244 B1**
(45) Date of publication and mention of the grant of the patent: **29.09.2004**
(21) Application number: 00103699.5
(22) Date of filing: 22.02.2000
(51) Int. Cl.: A47B 47/00, F16B 12/40, F16B 12/44, A47B 13/02

(54) **Assembly joint for furniture frames**
Verbindungselement für Möbelgestelle
Joint d'assemblage pour cadres de meubles

(30) Priority: 23.02.1999 IT UD990041
(43) Date of publication of application: 08.11.2000
(73) Proprietor: Odorico, Angelo, 33050 Rivignano (Udine) (IT); Odorico, Marco, 33050 Rivignano (UD) (IT)
(72) Inventor: Odorico, Angelo, 33050 Rivignano (Udine) (IT); Odorico, Marco, 33050 Rivignano (UD) (IT)
(74) Representative: Petraz, Gilberto Luigi

(56) References cited:
- EP-A- 0 403 852
- EP-A- 0 628 734
- BE-A- 629 188
- CH-A- 564 930
- DE-B- 2 339 337
- FR-A- 1 544 860
- FR-A- 2 247 926
- FR-A- 2 562 176
- FR-A- 2 642 799
- GB-A- 1 264 534
- US-A- 4 921 370
- US-A- 5 556 218

## Description

### FIELD OF THE INVENTION

This invention concerns an assembly joint for furniture frames as set forth in the main claim.

To be more exact, the invention refers to a joint used to assemble frames comprising tubular elements associated to each other and defining the bearing structure of furniture such as tables, desks, work-benches, sinks, shelves or similar.

### BACKGROUND OF THE INVENTION

The state of the art includes different types of joints for furniture frames comprising tubular elements made of metal or plastic, by means of which the tubular elements are assembled.

The joints allow to connect together, normally at 90°, two or more tubular elements, constituting the legs or supports for the plane surfaces of furniture, arranged in a line and/or at an angle.

The joints differ from each other not only in how the tubular elements are connected and in how said elements are constrained (mortised, screwed, etc.), but also according to the type, and particularly the section, of the tubular elements for which they are used.

The same joint can usually be used only for a single type of tubular element (round, square, rectangular, etc.), and therefore it is necessary to prepare various different joints even within the same line of furniture which uses tubular elements of different types.

This means that the possibility of varying the composition of the furniture is limited, and that there is a considerable increase in production costs.

Furthermore, when the frame is made, the tubular elements have to be subjected to specific machining in correspondence with the ends so as to make them suitable to be connected to the relative joints for the furniture to be assembled. Such machining entails additional production costs and makes it necessary to prepare tubular elements of a specific length for each piece of furniture to be made; this prevents the tubular elements from being cut to size in the event that this operation is necessary during the assembly step or even at subsequent times.

Moreover, the joints which are known in the state of the art do not always guarantee a perfectly stable and long-lasting attachment.

Another disadvantage of state-of-the-art solutions is that the attachment elements are visible on the outside of the joint.

One solution to these problems has been proposed in EP-A-403.852.

This document describes a joint comprising a main body with three wings arranged orthogonally with respect to each other; respective tubular elements constituting the frame of the piece of furniture are able to be anchored thereon.

The wings are conical in shape, narrowing towards the outside of the main body; each one is suitable to cooperate with a conical assembly element, opposite and specular thereto.

Between one end of one of the wings and the conical assembly element there is an expansion bushing, consisting of a plurality of clamping wedges shaped as a double cone; the wedges are connected to each other by means of connection ribs.

This solution is rather complex, there are problems in preparation, positioning, centering and reciprocal assembly of the pieces on the tube, aligning the holes through which the screws pass, and wear on the parts.

In particular, the connection rib of the wedges is subject to considerable loads during the expansion step and the clamping of the tube, and therefore it is easily. subject to premature wear and breakage.

Document GB-A-2.264.517 describes a connection element for tubular structures wherein there are connection arms with a square section; the conical end is able to cooperate with expansion locking elements equipped with mating angled surfaces.

This solution has a very limited clamping stability, and may cause troublesome play and looseness, because of the extremely limited coupling surface between the joint and the surface of the clamping elements.

US-A-4,921,370 discloses a tube connector comprising an adapter means circular in section and laterally broken to allow the outward expansion. This adapter means is outwardly expandable means by rotating around one only longitudinal axis of rotation which is placed opposite to a longitudinal opening provided in the body of the adapter itself and therefore is lateral with respect to the central longitudinal axis of the adapter. Accordingly, when a screw is tightened and a base member is made to advance in a cavity of the adapter, the surface of the adapter expands outwardly in a non-symmetrical and not regular way, because it opens rotating around one lateral longitudinal axis of rotation. In this way, the coupling and locking force between the outer surface of the adapter and the inner surface of the tube is inherently not correctly and uniformly distributed around the whole inner perimeter of the tube, and moreover in correspondence of the opening there is no contact at all with the inner wall of the tube; this fact can easily lead to plays and unwanted loosenings and movements between the elements blocked to each other.

The present Applicants have devised and embodied this invention to overcome the shortcomings of the state of the art, and to obtain further advantages.

### SUMMARY OF THE INVENTION

The invention is set forth and characterized in the main claim, while the dependent claims describe other characteristics of the main embodiment.

The purpose of the invention is to achieve a joint for furniture frames which will allow to achieve a safe and stable assembly of tubular elements, even with a different section.

Another purpose of the invention is to achieve a joint which is economical to make and practical to use, which will allow to use tubular elements of a standardized type and simply cut to size, without needing to do any preparatory machining.

A further purpose of the invention is to achieve a joint consisting of an extremely limited number of components, characterized in that it is very solid, subject to limited wear, extremely easy to assemble/dis-assemble, versatile and that there is substantially no limit to its use.

The joint according to the invention comprises a main body with at least two extensions shaped like a truncated cone or a truncated pyramid and converging towards the outside of the main body.

The extensions, normally arranged at 90° with respect to each other, are able to cooperate with respective expanding adapter means, of the inter-changeable type, with an outer shape mating with the tubular elements which are to be employed and an inner shape mating with the truncated cone or truncated pyramid extensions.

To be more exact, each of the adapter means is able to be inserted and clamped through interference inside the respective tubular elements to be connected to the joint and defines an axial cavity inside which one of the extensions with which the joint is equipped is able to be inserted and clamped.

According to the invention as claimed, said axial cavity has a length correlated to that of the relative extension so that, in the assembled position, the extensions are entirely contained inside the relative adapter means.

This ensures a very great stability in assembly which prevents the formation during the course of time of play and looseness.

It also ensures a perfectly uniform expansion of the adapter elements over their whole surface, ensuring a grip which is distributed over the entire inner wall of the tube.

In one form of embodiment, the truncated pyramid extensions have a square or rectangular base.

In one embodiment of the invention, after the tubular elements have been inserted and pre-assembled with the joint, the adapter means are able to be attached definitively to the respective extensions by means of screw elements or similar, arranged substantially axially along the relative extensions; the axis coincides with the axis of the tube to be assembled.

This attachment by means of screw elements causes the adapter means to expand radially, and to anchor through interference and pressure with the inner walls of the relative tubular elements.

According to a variant, the adapter means are able to couple in a snug fit with the relative extensions.

In a preferential embodiment, each of the adapter means consists of a plurality of longitudinal shaped profiles, constrained elastically together and cooperating centrally with a traction plate, made at least temporally solid with the shaped profiles so as to constitute substantially a single piece therewith; each of the shaped profiles defines an angular portion of the axial cavity.

In a preferential embodiment of the invention, the rear ends of the shaped profiles are shaped so as to define an elastic seating to contain and retain the plate, which can easily be removed once the adapter means has been extracted from the relative tube.

The traction plate has a central, threaded hole, and it functions substantially as a nut to allow the adapter element to be screwed to the main body of the joint.

The progressive screwing of the plate, which draws the relative adapter means towards the main body of the joint, causes the shaped profiles to slide on the truncated pyramid surfaces of the extensions of the joint; this causes the shaped profiles to progressively expand towards the outside and to press against the inner wall of the tube.

This expansion is permitted by the elastic connection which constrains the shaped profiles together.

To assemble the frame by means of the joint according to the invention, the adapter means are pre-assembled on the relative extensions of the main body of the joint, with a partial penetration of the extensions inside the relative axial cavities, and the tubular elements which are to be assembled are inserted onto the adapter means.

Inserting the tubular elements causes a further penetration of the extensions inside the relative axial cavities and therefore a greater expansion of the adapter means thanks to the truncated pyramid shape of the extensions.

As they expand radially, the adapter means are constrained through interference to the inner walls of the tubular elements.

The traction plate has a lateral play inside the relative housing seating when the adapter means is not clamped by the tube, and performs a function of reciprocal centering and positioning of the shaped profiles; it ensures that the radial expansion of the adapter means inside the relative tubular element occurs in a perfectly parallel manner along the whole longitudinal extension thereof.

This guarantees maximum adherence to the inner wall of the tubular element and therefore an optimum anchorage which is stable and enduring.

The tubular elements are therefore stably associated with the joint and it is substantially impossible to disassociate them therefrom, unless the adapter means are removed or at least partly unscrewed.

Using a single type of joint, the invention allows to assemble tubular elements of different sections simply by replacing the adapter means.

The adapter means are advantageously made of plastic, even though it comes within the field of the invention to make them in metal, alloy or other appropriate material.

### BRIEF DESCRIPTION OF THE DRAWINGS

These and other characteristics of the invention will become clear from the following description of a preferred form of embodiment, given as a non-restrictive example, with reference to the attached drawings wherein:
- Fig. 1: shows a joint for furniture frames according to the invention;
- Fig. 2: shows a variant of Fig. 1;
- Fig. 3: is a partly exploded view of a joint according to the invention;
- Figs. 4a and 4b: show in cross section the steps to assemble a tubular element of a frame by means of the joint according to the invention.

### DETAILED DESCRIPTION OF PREFERRED EMBODIMENT

With reference to the attached Figures, the reference number 10 denotes the joint for furniture frames 11 comprising a plurality of tubular elements 12 made of metal or plastic and assembled together.

The joint 10 allows to assemble two or more tubular elements 12 of any section whatsoever, arranged either at an angle or in a line, either horizontal or vertical, normally at a reciprocal angle of 90°.

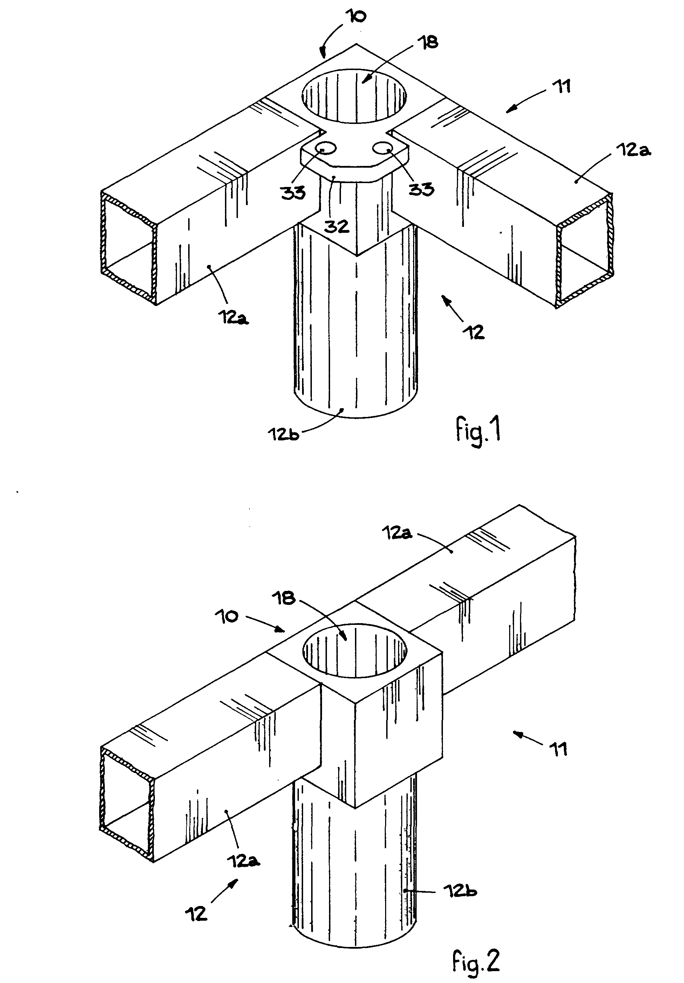

Fig. 1 shows the example of a joint 10 with which two tubular elements with a rectangular section 12a are assembled, horizontal and arranged at a right angle, defining for example the supports of the plane surface of a table or a shelf, and a tubular element with a round section 12b, vertical and constituting for example a leg or an upright.

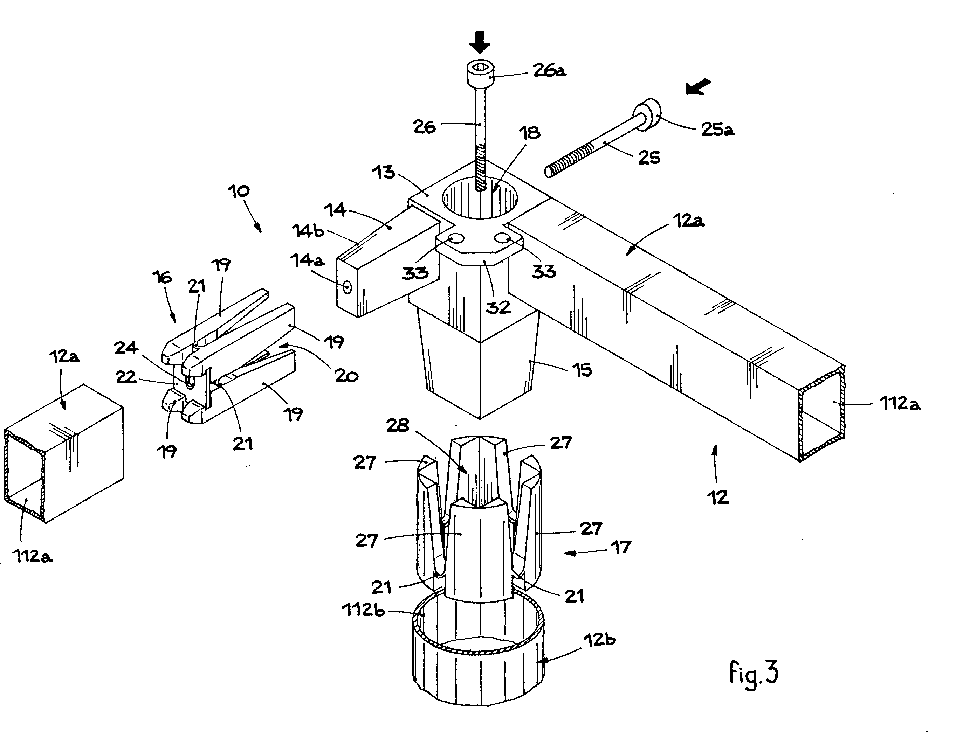

The joint 10 shown in Fig. 2, on the contrary, allows to assemble in line two horizontal tubular elements with a rectangular section 12a, and a vertical round tubular element 12b.

Other configurations of the joint 10 according to the invention are possible, to assemble a different number of tubular elements 12 and according to various arrangements thereof.

The joint 10 according to the invention, shown in a partly exploded view in Fig. 3 (the left portion of the joint is exploded while the right portion has the tube 12 assembled), comprises a main body 13, substantially cubic or parallelepiped in shape, provided in correspondence with its two faces with two lateral extensions 14 (of which only one is visible in the Figure) and a lower extension 15.

The lateral extensions 14 are arranged orthogonal to each other on a substantially horizontal plane and are shaped like a truncated pyramid with a rectangular section. The lateral extensions 14 are able to be coupled with respective adapter elements 16 (of which only one is shown), which allow tubular elements with a rectangular section 12a to be clamped thereon.

The lower extension 15 is substantially vertical, shaped like a truncated pyramid with a square section and is able to be coupled with an adapter element 17 which allows a tubular element 12b with a round section to be clamped thereon.

The adapter elements 16, 17 have an inner shape mating with that of the extensions 14, 15 onto which they are inserted, and an outer shape mating with that of the relative tubular elements 12a, 12b.

It is obvious that it is possible to apply tubular elements with a round section 12b onto the extensions 14 and/or tubular elements with a rectangular section 12a onto the extensions 15 simply by replacing the adapter elements 16, 17.

The extensions 14, 15 axially include respective through holes 14a, 15a communicating with a cavity 18 made on the main body 13 and open upwards.

In correspondence with the end facing the cavity 18, each of the two holes 14a has a wider part 114a defining a circumferential edge 30; in correspondence with the end of the hole 15a facing the cavity 18, on the contrary, there is in this case a ridge 31.

The main body 13 also has a pair of through holes 29, communicating at one end with the cavity 18 and at the other end with the outside, aligned with the through holes 14a of the lateral extensions 14.

On the inner corner of the main body 13 there is a corner bracket 32 in a single piece therewith, equipped with through holes 33, which serves to facilitate the positioning and attachment of a plane associated above the joint 10; the bracket 32 also functions as a structural reinforcement.

Each of the two adapter elements 16 comprises four longitudinal profiles 19, substantially identical, arranged in corner positions around a square or rectangular central plate 22, which functions as a traction nut; the profiles 19 are also reciprocally brought together or distanced by means of blocks or foils made of an at least partly elastic and/or yielding material.

In this case, the blocks consist of arch-shaped bridges 21, able to elastically connect the profiles 19 two by two, and to permit a controlled elastic expansion.

The front ends of the profiles 19 are shaped as teeth and, in their entirety, define a housing seating 23 for the plate 22.

The teeth have a front edge 19c of a certain thickness which extends beyond the plate 22 and has a reinforcing and stiffening function, since the plate 22 is affected by the stresses deriving from the clamping of the tubular elements 12 to the joint 10.

Advantageously, the adapter elements 16 are made of plastic, so as to have greater elasticity which will encourage expansion during the assembly step and a better grip on the inner wall of the tubes 12, whereas the plate 22 is made of metal.

According to a variant, the plate 22 is made in a single piece with the profiles 19.

The positioning of the plate 22 in the seating 23 defined between the profiles 19 is possible because the profiles 19 can be reciprocally moved elastically, thanks to the hinge function performed by the bridges 21, and to the presence of the undercuts 119 which allow to bring the profiles 19 closer together.

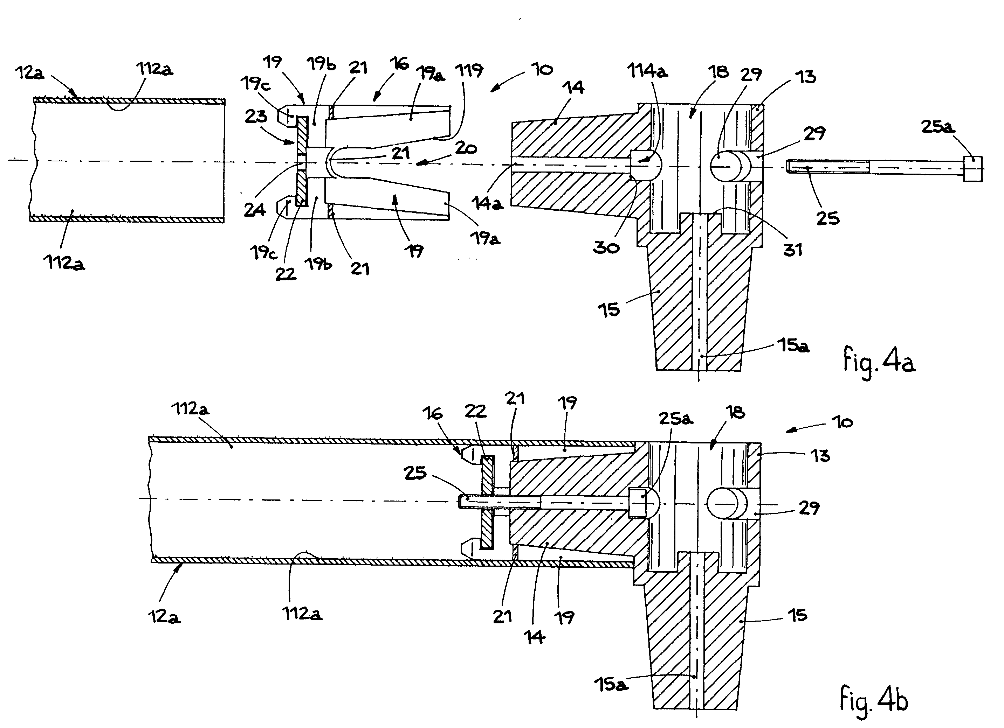

Each profile 19 substantially comprises a rear extension 19a, with a right-angled longitudinal development, an intermediate plate 19b and a protruding front edge 19c (Fig. 4a).

The rear extension 19a of each profile 19 is able to cooperate, due to its having the same shape, with a respective edge 14b of the lateral extension 14 during the assembly step.

Once it has been placed in position, the central plate 22 is constrained with a certain lateral play in the housing seating 23 made between the intermediate plates 19b and the front edges 19c of the profiles 19.

The plate 22 has an axial threaded hole 24, of a diameter mating with the hole 14a of the lateral extension 14.

The profiles 19, and in particular their extensions 19a, define internally an axial cavity 20, shaped like a truncated pyramid, mating with the lateral extension 14, inside which the latter is able to be inserted.

The profiles 19 also define an outer transverse section of the adapter element 16 with a shape mating with the inner section of the tubular element 12a.

According to the invention, with the lateral extension 14 inserted inside the axial cavity 20, with the relative edges 14b coupled to the inner edge of the extensions 19a, the profiles 19 are able to expand progressively outwards, distancing themselves from each other in correspondence with the rear extensions 19a, thanks to the bridges 21, but remaining in any case associated with the central plate 22, which is actually locked between the edges 19c which close towards each other when the extensions expand.

The adapter element 17 comprises four profiles 27 associated radially, in a similar way to the profiles 19 of the adapter element 16, around a central plate (not shown here) which has an axial threaded hole with a diameter mating with the through hole 15a of the lower extension 15.

The profiles 27, like the similar profiles 19, define an axial cavity 28, of a shape mating with that of the lower extension 15; the profiles 27 also have a circular outer development defining an outer conformation of the adapter element 17 mating with the inner section of the tubular element 12b.

According to the invention, to assemble a frame 11 using the joint 10, first the adapter elements 16 and 17 are inserted and pre-assembled on the relative extensions 14 and 15, and then the tubular elements 12a and 12b are inserted on the relative adapter elements 16 and 17.

To be more exact, with reference to Figs. 3, 4a and 4b, the adapter elements 16 are assembled on the relative lateral extensions 14, with a first, slight radial expansion due to the truncated pyramid shape of the latter.

The length of the axial cavity 20 substantially coincides with the length of the extension 14 so that, in the assembled position, the whole inner surface of the adapter element 16 is coupled with the relative outer surface of the relative extension.

Subsequently, the tubular elements 12a are inserted on the elements 16 and are clamped thereon due to the interference of the inner walls 112a with the profiles 19.

Then, the tubular elements 12a are definitively assembled by inserting a screw 25 through the hole 29 into the through hole 14a and screwing it into the threaded hole 24 of the plate 22 (Fig. 4b) which substantially functions as a nut.

The screw 25 abuts against the circumferential edge 30 with the head 25a, and hence its progressive tightening causes the adapter/tubular element combination to exert a traction effect on the lateral extension 14, and therefore a further radial expansion of the adapter element 16 caused as it approaches the main body 13 and consequently the relative profiles 19 expand due to the truncated pyramid shape of the relative extension 14.

Thanks also to the centering and guide function of the plate 22 arranged inside the housing seating 23, this radial expansion occurs in a perfectly parallel manner along the whole longitudinal extension of the adapter element 16, with a gripping effect on the inner wall of the relative tubular element 12a which is uniformly distributed over the whole length.

The tubular element 12b is assembled in the same way, coupling the adapter element 17 to the lower extension 15 and using a screw 26 inserted, through the cavity 18, into the through hole 15a with the head 26a abutting on the ridge 31.

The joint 10 allows to assemble tubular elements 12 of different section in correspondence with the extensions 14, 15 by replacing only the adapter elements 16, 17 by adapter elements with the same axial cavity, but with an outer conformation mating with the section of the specific tubular element 12 to be assembled.

The extensions 14 and 15 may have a converging polyhedral conformation different from the truncated pyramid with a rectangular section, cooperating with adapter elements composed of a different number of profiles.

Moreover, the joint 10 may be completed with covering elements which can be associated in a snug fit with the cavity 18 and/or the faces of the main body 13 which have the holes 29.

## Claims

1. Assembly joint for furniture frames (11) having tubular elements (12) connected together, said joint being able to connect at least two of said tubular elements (12) and comprising a main body (13) associated with at least two extensions (14, 15) shaped like a truncated cone or a truncated pyramid converging towards the outside of said main body (13) and having outer edges (14b), said joint (10) also comprising expanding adapter means (16, 17) able to cooperate with a relative one of said extensions (14, 15) to clamp a relative tubular element (12), said adapter means (16, 17) having an inner axial cavity (20, 28) of a shape mating with the outer shape of the relative extension (14, 15) so as to be able to be applied onto the relative extension (14, 15) during the pre-assembly step of the tubular elements and an outer shape mating with the inner shape of the relative tubular element (12a, 12b), said adapter means (16, 17) also integrally including elastic connection means (21) able to allow a radial expansion of said adapter means (16, 17) to clamp them under pressure against the inner wall of the relative tubular element (12), each of said adapter means (16, 17) consists of longitudinal profiles each defining an angular portion of said inner cavity (20, 28), said profiles (19, 27) are constrained together elastically by said connection means (21), and each of said profiles (19, 27) has a rear extension (19a) defining an inner edge able to cooperate with a relative outer edge (14b) of said relative extension (14, 15) associated with said main body, said rear extension (19a) being separated from the other of said rear extensions (19a),
**characterized in that** said axial cavity (20, 28) has a length correlated to the length of the relative extension (14, 15) so that, in the assembled position, the extensions are entirely contained inside the relative adapter means, ensuring a grip which is distributed over the entire inner wall of the tube.

2. Joint as in Claim 1, **characterized in that** said axial cavity (20, 28) has a length correlated to the length of the relative extension (14, 15), and that said adapter means (16, 17) are able, due to having the same shape, to be applied onto the relative extension (14, 15) during the pre-assembly step of the tubular elements (12).

3. Joint as in Claim 1, **characterized in that** each of said rear extensions (19a) has a right-angled development defining said inner edge able to cooperate with one outer edge (14b) of a respective extension (14).

4. Joint as in Claim 1, **characterized in that** said longitudinal profiles (19, 27) have a front edge (19c) able to define, in cooperation with the edges (19c) of the other profiles (19, 27), a positioning and centering seating (23) for a traction plate (22).

5. Joint as in Claim 4, **characterized in that** said plate (22) can be removed from said seating (23).

6. Joint as in Claim 4, **characterized in that** said plate (22) is made as a single piece with said longitudinal profiles (19, 27).

7. Joint as in Claim 4, **characterized in that** said plate (22) has a threaded hole (24) able to cooperate with an attachment element (25, 26).

8. Joint as in Claim 1, **characterized in that** said elastic connection means consist of arch-type bridges (21) each able to elastically connect said longitudinal profiles (19, 27) two by two.

9. Joint as in Claim 1, **characterized in that** said adapter means (16, 17) are able to be associated axially with the relative extension (14, 15) in a definitive manner by means of screw elements (25, 26).

10. Joint as in Claim 9, **characterized in that** it comprises at least a through hole (14a, 15a) made on said extensions (14, 15) and at least a threaded hole (24) made on said adapter means (16, 17), said holes being able to be aligned with each other to receive said screw elements (25, 26).

11. Joint as in Claim 9 or 10, **characterized in that** it comprises apertures (18, 29) made on the main body (13) and able to allow the positioning and tightening of said screw elements (25, 26).

12. Joint as in Claim 1, **characterized in that** it comprises a corner bracket (32) with attachment holes (33) made in cooperation with the inner corner of said main body (13).

13. Joint as in Claim 1, **characterized in that** said extensions (14, 15) are arranged at 90° with respect to each other.

14. Joint as in Claim 4, **characterized in that** said longitudinal profiles (19, 27) are made of plastic.

15. Joint as in Claim 4, **characterized in that** said traction plate (22) is made of metal.

## Patentansprüche

1. Montageverbinder für Möbelrahmen (11), welcher miteinander verbundene Rohrelemente (12) aufweist, wobei der Verbinder dafür ausgebildet ist, mindestens zwei der Rohrelemente (12) zu verbinden, und einen Hauptkörper (13) aufweist, der mindestens zwei kegelstumpfförmigen oder pyramidenstumpfförmigen Fortsätzen (14, 15) zuordnet ist, die zu der Außenseite des Hauptkörpers (13) konvergieren und Außenkanten (14b) haben, wobei der Verbinder (10) zusätzlich sich aufweitende Adaptereinrichtungen (16, 17) aufweist, welche in der Lage sind, mit einem der jeweiligen Fortsätze (14, 15) zusammenzuwirken, um ein jeweiliges Rohrelement (12) festzuklemmen, wobei die Adaptereinrichtungen (16, 17) einen inneren axialen Hohlraum (20, 28) mit einer zu der Außenform des jeweiligen Fortsatzes (14, 15) passenden Form haben, um somit in der Lage zu sein, an den jeweiligen Fortsätzen (14, 15) während des Vormontageschrittes der Rohrelemente angebracht zu werden, und eine Außenform haben, die zu einer Innenform des jeweiligen Rohrelements (12a, 12b) paßt, wobei die Adaptereinrichtungen (16, 17) außerdem eine integrale elastische Verbindungseinrichtung (21) aufweisen, welche in der Lage ist, eine radiale Aufweitung der Adaptereinrichtungen (16, 17) zu ermöglichen, um sie unter Druck gegen die Innenwand des jeweiligen Rohrelements (12) zu klemmen, wobei jede der Adaptereinrichtungen (16, 17) aus Längsprofilen besteht, die jeweils einen Winkelbereich des inneren Hohlraums (20, 28) bilden, wobei die Profile (19, 27) von den Verbindungseinrichtungen (21) elastisch gegeneinander gezwängt werden und wobei jedes der Profile (19, 27) einen rückseitigen Fortsatz (19a) hat, der eine Innenkante bildet, die in der Lage ist, mit einer jeweiligen Außenkante (14b) des jeweiligen Fortsatzes (14, 15) zusammenzuwirken, der dem Hauptkörper zugeordnet ist, wobei der rückseitige Fortsatz (19a) von den anderen rückseitigen Fortsätzen (19a) getrennt ist,
**dadurch gekennzeichnet,**
**daß** der axiale Hohlraum (20, 28) eine Länge hat, die mit der Länge des jeweiligen Fortsatzes (14, 15) in Korrelation steht, so daß die Fortsätze in der montierten Position vollständig innerhalb der jeweiligen Adaptereinrichtungen enthalten sind und somit einen über die gesamte Innenwand des Rohres verteilten Griff sicherstellen.

2. Verbinder nach Anspruch 1,
**dadurch gekennzeichnet,**
**daß** der axiale Hohlraum (20, 28) eine Länge hat, die zu der Länge des jeweiligen Fortsatzes (14, 15) in Korrelation steht,
und **daß** die Adaptereinrichtungen (16, 17) wegen ihrer gleichen Form in der Lage sind, an den jeweiligen Fortsätzen (14, 15) während des Vormontageschritts der Rohrelemente (12) angebracht zu werden.

3. Verbinder nach Anspruch 1,
**dadurch gekennzeichnet,**
**daß** jeder der rückseitigen Fortsätze (19a) eine rechtwinklige Ausbildung aufweist, welche die Innenkante bildet, die zum Zusammenwirken mit der einen Außenkante (14b) des jeweiligen Fortsatzes (14) in der Lage ist.

4. Verbinder nach Anspruch 1,
**dadurch gekennzeichnet,**
**daß** die Längsprofile (19, 27) eine Vorderkante (19c) haben, die in der Lage ist, im Zusammenwirken mit den Kanten (19c) der anderen Profile (19, 27) einen positionierenden und zentrierenden Sitz für eine Zugplatte (22) zu bilden.

5. Verbinder nach Anspruch 4,
**dadurch gekennzeichnet,**
**daß** die Platte (22) von dem Sitz (23) entfernt werden kann.

6. Verbinder nach Anspruch 4,
**dadurch gekennzeichnet,**
**daß** die Platte (22) als Einzelteil mit den Längsprofilen (19, 27) ausgebildet ist.

7. Verbinder nach Anspruch 4,
**dadurch gekennzeichnet,**
**daß** die Platte (22) ein Gewindeloch (24) hat, welches mit einem Befestigungselement (25, 26) zusammenwirken kann.

8. Verbinder nach Anspruch 1,
**dadurch gekennzeichnet,**
**daß** die elastische Verbindungseinrichtung aus bogenförmigen Brücken (21) besteht, von denen jede in der Lage ist, die Längsprofile (19, 27) jeweils paarweise zu verbinden.

9. Verbinder nach Anspruch 1,
**dadurch gekennzeichnet,**
**daß** die Adaptereinrichtungen (16, 17) mit Hilfe von Schraubenelementen (25, 26) den jeweiligen Fortsätzen (14, 15) axial in definitiver Weise zugeordnet werden können.

10. Verbinder nach Anspruch 9,
**dadurch gekennzeichnet,**
**daß** er zumindest ein an den Fortsätzen (14, 15) angebrachtes Durchgangsloch (14a, 15a) und zumindest ein an den Adaptereinrichtungen (16, 17) angebrachtes Gewindeloch (24) aufweist, wobei die Löcher miteinander ausgefluchtet werden können, um die Schraubenelemente (25, 26) aufzunehmen.

11. Verbinder nach Anspruch 9 oder 10,
**dadurch gekennzeichnet,**
**daß** er an dem Hauptkörper (13) angebrachte Öffnungen (18, 29) aufweist und in der Lage ist, das Positionieren und das Anziehen der Schraubenelemente (25, 26) zu ermöglichen.

12. Verbinder nach Anspruch 1,
**dadurch gekennzeichnet,**
**daß** er eine Eckstütze (32) mit Montagelöchern (33) aufweist, welche in Kooperation mit der inneren Ecke des Hauptkörpers (13) ausgebildet ist.

13. Verbinder nach Anspruch 1,
**dadurch gekennzeichnet,**
**daß** die Fortsätze (14, 15) unter einem Winkel von 90° zueinander angeordnet sind.

14. Verbinder nach Anspruch 4,
**dadurch gekennzeichnet,**
**daß** die Längsprofile (19, 27) aus Kunststoff hergestellt sind.

15. Verbinder nach Anspruch 4,
**dadurch gekennzeichnet,**
**daß** die Zugplatte (22) aus Metall hergestellt ist.

## Revendications

1. Joint d'assemblage pour des cadres de meubles (11) ayant des éléments tubulaires (12) connectés entre eux, ledit joint étant capable de relier au moins deux desdits éléments tubulaires (12) et comprenant un corps principal (13) associé avec au moins deux extension (14, 15) en forme de cône tronqué ou d'une pyramide tronquée convergeant vers l'extérieur dudit corps principal (13) et ayant des bords externes (14b), ledit joint (10) comprenant des adaptateurs qui se dilatent (16, 17) capables de coopérer avec une desdites extensions (14, 15) correspondantes pour bloquer un élément tubulaire relatif (12), ledit adaptateur (16, 17) ayant une cavité axiale interne (20, 28) d'une forme correspondant à la forme externe de l'extension correspondante (14, 15) de façon à pouvoir être appliquée sur l'extension correspondante (14, 15) pendant l'étape de pré-assemblage des éléments tubulaires et une forme externe correspondant à la forme interne de l'élément tubulaire relatif (12a, 12b), ledit adaptateur (16, 17) comprenant également intégralement des moyens de liaison élastiques (21) capables de permettre une expansion radiale desdits adaptateurs (16, 17) pour les bloquer par pression contre la paroi interne de l'élément tubulaire relatif (12), chacun desdits adaptateurs (16, 17) consistant en des profilés longitudinaux définissant chacun une partie angulaire de ladite cavité interne (20, 28), lesdits profilés (19, 27) étant maintenus ensemble de manière élastique par lesdits moyens de liaison (21) et chacun desdits profilés (19, 27) ayant une extension arrière (19a) définissant un bord interne capable de coopérer avec un bord externe correspondant (14b) de ladite extension correspondante (14, 15) associée avec le corps principal, ladite extension arrière (19a) étant séparée de l'autre desdites extensions arrière (19a),
**caractérisé en ce que** ladite cavité axiale (20, 28) a une longueur corrélée à la longueur de l'extension correspondante (14, 15), de façon que, dans la position assemblée, les extensions soient entièrement contenues à l'intérieur de l'adaptateur correspondant, assurant une prise qui est répartie sur toute la paroi interne du tube.

2. Joint selon la revendication 1, **caractérisé en ce que** ladite cavité axiale (20, 28) a une longueur corrélée à la longueur de l'extension relative (14, 15) et **en ce que** lesdits adaptateurs (16, 17) sont capables, du fait qu'ils ont la même forme, d'être appliqués sur l'extension relative (14, 15) pendant l'étape de pré-assemblage des éléments tubulaires (12).

3. Joint selon la revendication 1, **caractérisé en ce que** ladite extension arrière (19a) a un développement à angle droit définissant ledit bord interne capable de coopérer avec un bord externe (14b) d'une extension correspondante (14).

4. Joint selon la revendication 1, **caractérisé en ce que** lesdits profilés longitudinaux (19, 27) ont un bord avant (19c) capable de définir, en coopération avec les bords (19c) des autres profilés (19, 27), une assise de positionnement et de centrage (23) pour une plaque de traction (22).

5. Joint selon la revendication 4, **caractérisé en ce que** ladite plaque (22) peut être retirée de ladite assise (23).

6. Joint selon la revendication 4, **caractérisé en ce que** ladite plaque (22) est réalisée en une seule pièce avec lesdits profilés longitudinaux (19, 27).

7. Joint selon la revendication 4, **caractérisé en ce que** ladite plaque (22) comporte un trou taraudé (24) capable de coopérer avec un élément de fixation (25, 26).

8. Joint selon la revendication 1, **caractérisé en ce que** lesdits moyens de liaison élastique consistent en des ponts en forme d'arches (21), chacun capable de relier de manière élastique lesdits profilés longitudinaux (19, 27) deux par deux.

9. Joint selon la revendication 1, **caractérisé en ce que** lesdits adaptateurs (16, 17) sont capables d'être associés axialement avec l'extension correspondante (14, 15) d'une manière définitive à l'aide d'éléments de vis (25, 26).

10. Joint selon la revendication 9, **caractérisé en ce qu'**il comprend au moins un trou traversant (14a, 15a) réalisé sur lesdites extensions (14, 15) et au moins un trou taraudé (24) réalisé sur lesdits adaptateurs (16, 17), lesdits trous étant capables d'être alignés entre eux pour recevoir lesdites vis (25, 26).

11. Joint selon la revendication 9 ou 10, **caractérisé en ce qu'**il comprend des ouvertures (18, 29) réalisées sur le corps principal (13) et capables de permettre le positionnement et le serrage desdites vis (25, 26).

12. Joint selon la revendication 1, **caractérisé en ce qu'**il comprend une équerre angulaire (32) avec des trous de fixation (33) réalisés en coopération avec l'angle interne dudit corps principal (13).

13. Joint selon la revendication 1, **caractérisé en ce que** lesdites extensions (14, 15) sont disposées à 90° l'une par rapport à l'autre.

14. Joint selon la revendication 4, **caractérisé en ce que** lesdits profilés longitudinaux (19, 27) sont constitués de manière plastique.

15. Joint selon la revendication 4, **caractérisé en ce que** ladite plaque de traction (22) est constituée de métal.
